# EUROPEAN PATENT SPECIFICATION

(11) **EP 1 836 044 B1**
(45) Date of publication and mention of the grant of the patent: **19.08.2015**
(21) Application number: 04806895.1
(22) Date of filing: 28.12.2004
(51) Int. Cl.: B29D 30/06, B29C 43/02, B29C 33/08

(54) **METHOD AND APPARATUS FOR MANUFACTURING PNEUMATIC TYRES**
VERFAHREN UND VORRICHTUNG ZUR HERSTELLUNG VON LUFTREIFEN
PROCEDE ET APPAREIL DE FABRICATION DE PNEUMATIQUES

(43) Date of publication of application: 26.09.2007
(73) Proprietor: Pirelli Tyre S.p.A., 20126 Milano (IT)
(72) Inventor: MARCHINI, Maurizio, 20126 Milano (IT); MARIANI, Fiorenzo, 20126 Milano (IT); MISANI, Pierangelo, 20126 Milano (IT)
(74) Representative: Tansini, Elio Fabrizio
(86) International application number: PCT/IT2004/000730
(87) International publication number: WO 2006/070412

(56) References cited:
- EP-A- 1 038 657
- WO-A-2004/045837
- DE-A1- 2 113 698
- US-B1- 6 332 999
- PATENT ABSTRACTS OF JAPAN vol. 1996, no. 10, 31 October 1996 (1996-10-31) & JP 08 142057 A (SUMITOMO RUBBER IND LTD), 4 June 1996 (1996-06-04)

## Description

The present invention relates to a method and an apparatus for manufacturing pneumatic tyres for vehicle wheels.

In a tyre production cycle it is provided that, subsequently to a building cycle in which the different tyre components are manufactured and/or assembled, a moulding and vulcanisation process be carried out which is aimed at defining the tyre structure according to a desired geometry, usually having a particular tread pattern.

To this aim, the tyre is enclosed in a moulding cavity defined internally of a vulcanisation mould and conforming in shape to the geometric configuration of the outer surfaces of the tyre to be obtained.

A pneumatic tyre generally comprises a carcass structure of a ring-shaped toroidal conformation, including one or more carcass plies strengthened with reinforcing cords lying in radial planes, i.e. in planes containing the rotation axis of the tyre. Each carcass ply has its ends rigidly associated with at least one metallic annular anchoring structure, usually known as bead core, constituting the reinforcement to the beads, i.e. to the radially internal ends of said tyre, the function of which is to enable assembling of the tyre with a corresponding mounting rim. A band of elastomeric material referred to as tread band is applied crownwise to said carcass structure, and in said tread band at the end of the vulcanisation and moulding steps a raised pattern is formed for ground contact. Placed between the carcass structure and the tread band is a reinforcing structure currently known as belt structure. This belt structure usually comprises, in the case of tyres for cars, at least two radially superposed strips of rubberised fabric provided with reinforcing cords, usually of metal, disposed parallel to each other in each strip and crossed with the cords of the adjacent strip, preferably symmetrically disposed relative to the equatorial plane of the tyre. Preferably said belt structure, at least on the ends of the underlying strips, further comprises a third layer of textile or metallic cords that are circumferentially disposed (at 0 degrees), at a radially external position.

Respective sidewalls of elastomeric material are also applied to the side surfaces of the carcass structure, each extending from one of the side edges of the tread band until close to the respective annular anchoring structure to the beads.

Finally, in tyres of the tubeless type, i.e. devoid of air tube, there is the presence of a radially internal layer having impermeability features to ensure airtightness to the tyre, said layer being generally referred to as "liner".

To the aims of the present description it is herein to be pointed out that by the term "elastomeric material" it is intended a composition comprising at least one elastomer polymer and at least one reinforcing filler. Preferably, this composition further comprises additives such as cross-linking agents and/or plasticizers. Due to the presence of the cross-linking agents, this material can be cross-linked through heating, so as to form the final article of manufacture.

DE2123698 provides a tyre mould consisting of two identical halves which are respectively separated along the central plane.

In order to overcome problems during the de-moulding occurring with complex patterns, as well as reducing expansion forces required for the same, this prior reference provide a multi-part mould of the type described above that is developed in such a way that even complex profile patterns can be produced in the tyre tread with great accuracy, with a relatively simple construction and simple operation with relatively little force.

To this aim, profile ribs are inserted within guide recesses which are delimited between separation and guide walls of the mould, provided in the tread-band region of the tyre.

The sets of profile ribs are moveable in a radial direction in relation to the axis of the mould, from a retracted position to a position located radially further towards the inside of the mould, in which the profile edges of the tools penetrate through the tread surface into the tread region of the tyre.

There are moulding and curing methods in which a green tyre is set within the mould, being placed on a substantially rigid toroidal support. Said methods are preferably used for tyres that, based on recent manufacturing processes, are produced starting from a limited number of elementary semi-finished products fed onto a toroidal support the outer profile of which is coincident with that of the radially internal surface of the tyre that is wished to be produced. Said toroidal support is moved, preferably by a robotized system, between a plurality of stations in each of which through automated sequences, a particular tyre manufacturing step is carried out (see document EP 0 928 680 in the name of the same Applicant, for example).

The European Patent Application issued under No. 0 976 533 in the name of the same Applicant discloses a method and an apparatus for moulding and curing tyres for vehicle wheels in which a green tyre manufactured on a toroidal support is enclosed in the moulding cavity of a vulcanisation mould; subsequently, steam or other fluid under pressure is fed into at least one gap for fluid diffusion created between the outer surface of the toroidal support and the inner surface of the tyre, thereby imposing a radial expansion to said tyre that causes pressing of the latter against the inner surfaces of the moulding cavity. Following this pressing operation, suitable forming ridges set in the moulding cavity penetrate into the elastomeric material in the region of the tread band, to generate recesses and grooves such disposed as to form a desired tread pattern.

By a method of the above described type, the cured tyre can however show some faults, because the steam or other working fluid used for vulcanisation comes into direct contact with the innermost layer of the tyre, as for tyres directly assembled and cured on the same toroidal support there is not the effect of the vulcanisation bladder normally used when vulcanisation is carried out on tyres built by assembling semi-finished components without the aid of a toroidal support.

To overcome these drawbacks, the Applicant has already put into practice the above described methods through the teachings of document WO 2004/045837 according to which a green tyre is submitted to a preliminary step of pressing it against the toroidal support while simultaneously administering heat, to obtain at least partial vulcanisation of the innermost layer of the tyre itself and of the bead region. In this manner it is possible to subsequently carry out a moulding and vulcanisation step while expanding the tyre against the outer surfaces of the moulding cavity, without involving lack of homogeneity and of evenness in that tyre portion that is in contact with the toroidal support, which portion is the first to come into contact with the working fluid during vulcanisation. The working fluid used in the moulding and vulcanisation step in fact comes into contact with parts of the tyre that have already been partly cured and in which therefore the behaviour of the material is no longer plastic but almost elastic, thereby withstanding the fluid action without experiencing deterioration or deformations.

The Applicant has however perceived that also in the above described vulcanisation methods submitting the tyre to a preliminary pressing treatment against the toroidal support, surface unevennesses in the radially external parts of the tyre can occur, at least under particular work conditions.

According to the Applicant's perception, in fact, the preliminary pressing step against the toroidal support, aimed at obtaining an at least partial cross-linking of the inner tyre surface, can also cause partial cross-linking of the radially external surface portions of the tyre itself.

In more detail, the Applicant has noticed that closure of the tyre into the moulding cavity can cause the tread band to be partially penetrated by the forming ridges set in the moulding cavity for the purpose of creating the tread pattern so that, as a result, heat transfer and partial cross-linking of the tyre regions directly in contact with the forming ridges occur during the preliminary pressing step. Consequently, unevennesses are created in the elastomeric material constituting the tread band and correct adaptation of the material itself to the conformation of the moulding cavity during the subsequent moulding and vulcanisation step is impaired.

The Applicant has further observed that part of the fluid under pressure, nitrogen for example, admitted into the mould to cause the preliminary pressing treatment against the toroidal support can be entrapped between the outer surface of the tread band and the moulding cavity, in the grooves delimited by the forming ridges to form the pattern blocks on the tyre tread band. Therefore gaseous pockets are created that can be hardly evacuated during the subsequent moulding and vulcanisation step and can cause geometric unevennesses in the finished product.

The Applicant has also become aware of the fact that, in the moulding and vulcanisation steps of tyres having a marked transverse curvature, for two-wheeled vehicles for example, it would be better to use a mould that, by virtue of its geometrical features, is able to ensure a high degree of circularity and uniformity in the cured tyre.

The Applicant has realised that the above described problems can be overcome through use of a mould the moulding cavity of which is defined by two half shells that can be axially moved close to each other until they mutually mate, preventing the forming ridges from coming into contact with the radially external surface of the tyre tread band in the period elapsing between closure of the tyre into the moulding cavity and the moulding and vulcanisation step of said tyre against the walls of the moulding cavity itself.

In accordance with the present invention, the Applicant has found that, by use of a mould of the above described type and by keeping the forming ridges radially spaced apart from the radially external surface of the tread band during said preliminary pressing step against the toroidal support the elastomeric material is prevented from prematurely cross-linking in the outermost layers of the tyre thus impairing a correct implementation of the moulding step.

Therefore, important improvements can be achieved in the geometrical and structural uniformity of the finished product, in particular when two-wheeled vehicles are concerned.

In addition, the forming ridges can be advantageously set so as to be slidably guided in through slits arranged in the half shells. In this way any residual fluid can be evacuated from the moulding cavity, through gaps defined between the through slits and the forming ridges.

Subsequently, the forming ridges are moved close to the tread band when the tyre moulding and vulcanisation step begins, with possible expansion of said tyre against the moulding cavity.

Also avoided are geometrical faults due to fluid stagnation between the radially external surface of the tread band and the grooves delimited between the forming ridges.

In addition by moving the forming ridges away from the tread band before opening of the mould when vulcanisation is over, disengagement and removal of the finished tyre from the moulding cavity is made simpler, even when the tread band has a tread pattern provided with substantially circumferential grooves and/or a rather complicated tread pattern.

In more detail, in accordance with a first aspect, the invention relates to a method of manufacturing pneumatic tyres for vehicle wheels, comprising the steps of: setting a green tyre comprising a tread band having a radially external surface, on a toroidal support provided with an outer surface conforming in shape to an inner surface of the tyre itself; setting a vulcanisation mould having a moulding cavity defined by two half shells adapted to be moved close to each other in an axial direction, and circumscribed by centripetally approachable circumferential sectors carrying forming ridges facing a geometric axis of the moulding cavity and movable in through slits set in the half shells; closing the tyre into the moulding cavity; pressing the tyre against the outer surface of the toroidal support; administering heat to the inner surface of the tyre pressed against the toroidal support, keeping the circumferential sectors spaced apart from the radially external surface of the tread band; centripetally approaching the circumferential sectors of the mould to cause at least partial penetration of the forming ridges into the radially external surface of the tread band of the tyre; pressing the radially external surface of the tread band of the tyre against a radially internal surface of the moulding cavity; administering heat to the tyre penetrated by the forming ridges of the circumferential sectors.

In accordance with a second aspect, the invention relates to an apparatus for manufacturing pneumatic tyres for vehicle wheels, comprising: a toroidal support having an outer surface conforming in shape to the inner surface of a green tyre under working comprising a tread band provided with a radially external surface; devices for arranging the green tyre on the toroidal support; a vulcanisation mould having two half shells adapted to be moved close to each other to define a moulding cavity, and centripetally approachable circumferential sectors circumscribing the moulding cavity and carrying forming ridges facing the geometric axis of the moulding cavity and movable in through slits set in said half shells; devices for closing the tyre into the moulding cavity; devices for pressing the tyre enclosed in the moulding cavity against the outer surface of the toroidal support; first devices for administering heat to the inner surface of the tyre pressed against the toroidal support; driving devices to be activated subsequently to closure of the tyre into the moulding cavity to cause translation of the circumferential sectors between a first work condition at which the forming ridges are radially spaced apart from the radially external surface of the tread band of the tyre enclosed in the moulding cavity, and a second work condition at which the forming ridges penetrate at least partly into the radially external surface of the tread band; devices for pressing the radially external surface of the tread band of the tyre against a radially internal surface of the moulding cavity; second devices for administering heat to the tyre penetrated by the forming ridges of the circumferential sectors.

Further features and advantages will become more apparent from the detailed description of a preferred, but not exclusive, embodiment of a method of manufacturing tyres and an apparatus for putting said method into practice, in accordance with the present invention.

This description will be set out hereinafter with reference to the accompanying drawings, given by way of non-limiting example, in which:
- Fig. 1 is a fragmentary diametrical section view of a moulding and curing apparatus in accordance with the present invention, set in an open condition to enable introduction and removal of a tyre under working;
- Fig. 2 shows the apparatus in Fig. 1 in a closed condition, in a step of pressing the tyre under working against the outer surface of a toroidal support;
- Fig. 3 shows the apparatus in a step subsequent to that in Fig. 2, in a different diametrical section plane, during pressing of the tyre against the inner surfaces of the moulding cavity.

With reference to the drawings, a moulding and curing apparatus for tyres of vehicle wheels in accordance with the present invention has been generally denoted at 101.

Apparatus 101 comprises a vulcanisation mould 102 operatively associated with a casing 103 and having a lower half shell 130a and an upper half shell 130b in engagement with a base 103a and a closing portion 103b of casing 103 respectively, or other suitable devices to close a tyre under working 50 into the mould itself.

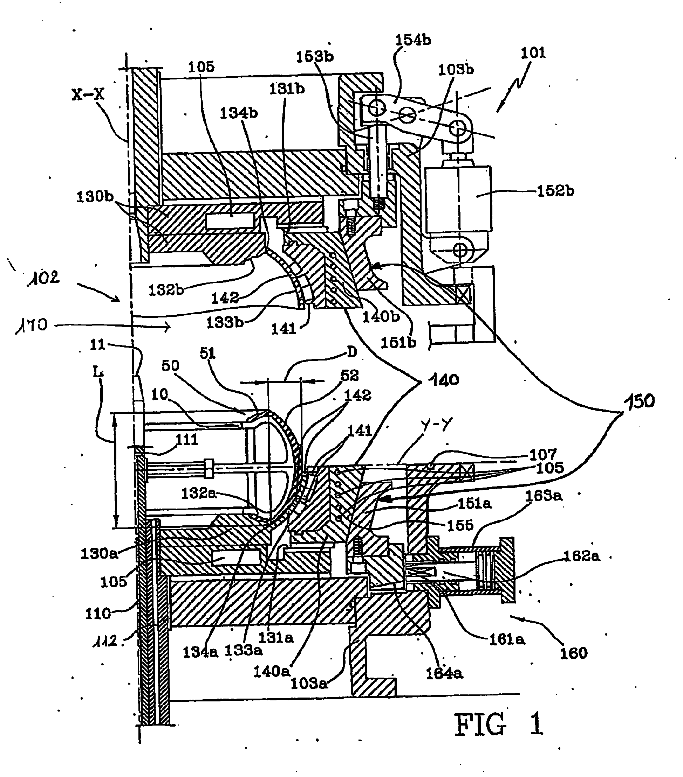

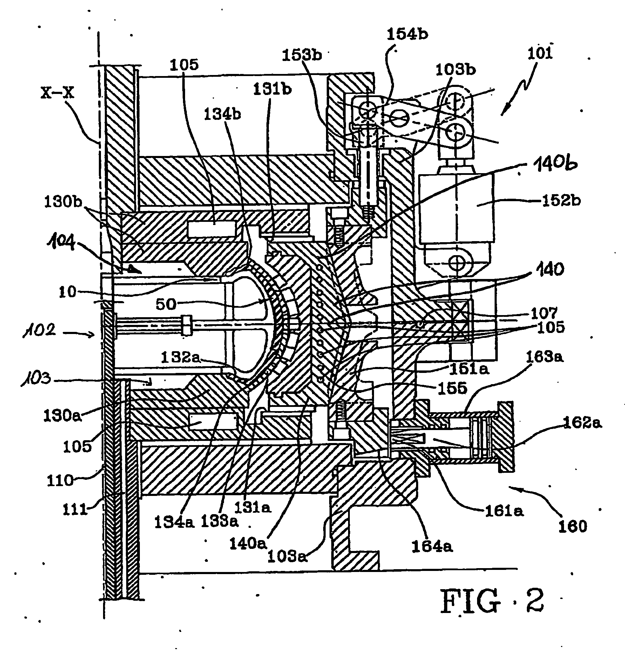

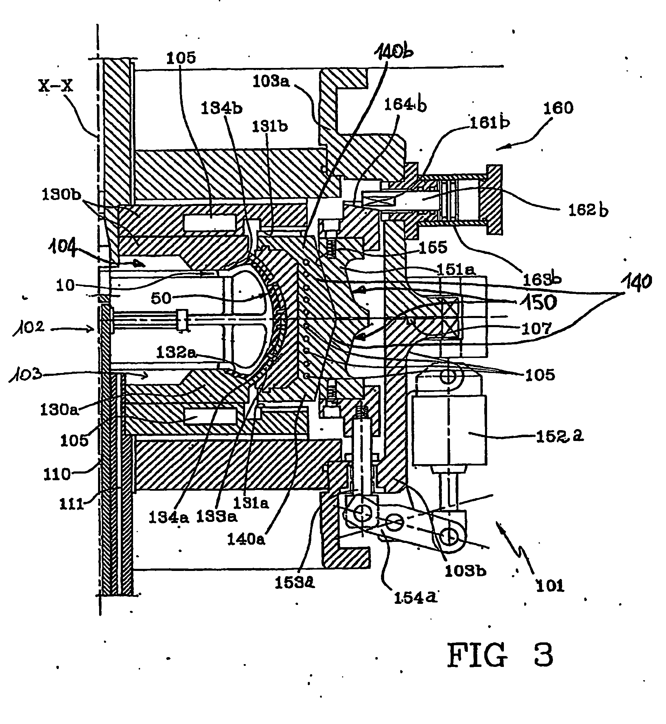

The base 103a and the closing portion 103b, together with the respective lower 130a and upper 130b half shells are in fact movable relative to each other between an open condition at which they are mutually spaced apart as shown in Fig. 1, to enable introduction of the tyre 50 to be cured into the mould 102, and a closed position at which, as shown in Figs. 2 and 3, they are disposed close to each other at a mutually mating position to close tyre 50 into a moulding cavity 104 having inner walls reproducing the geometrical contour to be given to the tyre at the end of the moulding and curing process.

Preferably the half shells 130a, 130b mutually mate according to an undulated surface of the substantially sinusoidal type, to advantageously allow angular centring of tyre 50 in the moulding cavity 104.

In detail, the half shells 130a, 130b face each other and have side portions 132a, 132b set to operate against the opposite sides of tyre 50, so as to form the outer surfaces of the tyre sidewalls 51.

Extending from the side portion 132a, 132b of each half shell 130a, 130b in an arched profile is a radially external portion 133a, 133b designed to operate on a so-called tread band 52 of tyre 50.

In a preferential embodiment, apparatus 101 is particularly suitable to manufacture tyres 50 of a marked transverse curvature, for two-wheeled vehicles for example, such as tyres for motorcycles.

In fact, as compared with tyres for four-wheeled vehicles, tyres for two-wheeled vehicles are distinguishable for their marked transverse curvature. This transverse curvature is usually defined by the particular value of a so-called curvature ratio, i.e. the ratio of the distance "D" existing between the radially external point of the tread band and the line passing through the laterally opposite extremities of the tread band itself measured in the equatorial plane of the tyre 50, to the distance "L" measured along the tyre chord between said extremities. In tyres for two-wheeled vehicles, the value of the curvature ratio is generally at least as high as 0.15 and it is usually in the order of about 0.3 for rear tyres an even higher until about 0.45 for front tyres, against a value usually in the order of about 0.05 when motor vehicle tyres are concerned.

Correspondingly, the moulding cavity 104 defined by the half shells 130a, 130b disposed close to each other in the closed condition, has a given curvature ratio between the following two distances: the distance, measured in an equatorial plane Y-Y (substantially coincident with the equatorial plane of tyre 50 within the moulding cavity 104), existing between a point of the radially internal surface of the moulding cavity (without considering the forming ridges) and the straight line lying in a plane radial to a geometric axis X-X of the moulding cavity 104 and passing through the transition points 134a, 134b belonging to the same radial plane between the side portions 132a, 132b and the radially external portions 133a, 133b; and the distance measured along the chord of the moulding cavity 104 between said transition points.

In moulds for tyres for two-wheeled vehicles, the value of said curvature ratio is preferably at least as high as 0.15 and is usually in the order of about 0.3 for rear-tyre moulds, and even higher until about 0.45 for front-tyre moulds, against a value usually in the order of about 0.05 when moulds for motor vehicle tyres are concerned.

Mould 102 further comprises at least one crown of circumferential sectors 140 circumscribing the moulding cavity 104 and set to operate on a radially external surface of the tread band 52 of tyre 50, to therein create a series of cuts and longitudinal and/or transverse grooves that are suitably disposed according to a desired "tread pattern". To this aim the circumferential sectors 140 mounted externally of the radially external portions 133a, 133b, carry forming ridges 141 facing said geometric axis X-X of the moulding cavity 104 and designed to act on the tread band 52 by means of through slits 142 set in the radially external portions 133a, 133b of the half shells 130a, 130b.

Preferably, each circumferential sector 140 is axially divided into a lower half 140a and an upper half 140b, each in engagement with one of the lower 130a and upper 130b half shells respectively, at perimetral slide surfaces 131a, 131b for example that, at least in the closed condition, are adapted to guide the circumferential sectors 140 so as to enable radial movement of same relative to the geometric axis X-X of the moulding cavity 104.

Further associated with the circumferential sectors 140 are driving devices 150 to be activated subsequently to closure of tyre 50 into the moulding cavity 104, i.e. when the half shells 130a, 130b are in the closed condition, to cause radial translation of the circumferential sectors 140 between a first work condition at which, as shown in Fig. 2, they are radially spaced apart from the geometric axis X-X of the moulding cavity 104, and a second work condition at which, as shown in Fig. 3, the circumferential sectors 140 are moved radially close to said geometric axis X-X, preferably in circumferential abutment relationship against each other.

In more detail, in the first work condition the forming ridges 141 carried by the circumferential sectors 140 are radially spaced apart from the respective half shells 130a, 130b and therefore from the radially external surface of the tread band 52 of tyre 50 disposed in the moulding cavity 104. Preferably, as shown in Fig. 2, in this condition the forming ridges 141 are out of the through slits 142 or in any case do not project towards the inside of the moulding cavity 104 to an important extent. As shown in Fig. 3, in the second work condition the circumferential sectors 140 on the contrary are disposed radially close to each other so that the forming ridges 141 penetrate at least partly into the tread band 52.

Preferably, the driving devices 150 comprise at least one sector-carrying ring 151a, 151b that is axially movable relative to the moulding cavity 104 and has at least one frustoconical surface 155 slidably engaging the circumferential sectors 140 to cause radial translation of the latter between the first and second work conditions, following an axial movement of the sector-carrying ring itself. In more detail, in the embodiment shown by way of example two sector-carrying rings are provided, i.e. a lower sector-carrying ring 151a and an upper sector-carrying ring 151b, associated with the lower and upper halves, 140a and 140b, respectively of the circumferential sectors 140.

Axial movement of each sector-carrying ring 151a, 151b can be obtained by means of pusher members operating on control rods 153a, 153b slidably engaged through the casing 103 of mould 102. More particularly, in the embodiment herein shown the pusher members comprise a plurality of first fluid-operated actuators 152a, 152b that are circumferentially distributed and externally fastened to the base 103a and the closing portion 103b respectively. Each actuator 152a, 152b operates on the respective control rod 153a, 153b by means of respective idler arms 154a, 154b pivoted on the base 103a and the closing portion 103b, respectively.

As an alternative to the above description, the driving devices 150 can be set to directly operate exclusively on one of the lower and upper halves 140a and 140b of each circumferential sector 140, movement of the other half being obtained by dragging of the one half controlled by the driving means.

Also provided can be locking devices 160 to be activated for fixing positioning of the circumferential sectors 140 to the second work position. These locking devices 160 can for example comprise one or more stop blocks 161a, 161b carried by auxiliary control rods 162a, 162b slidably engaged through the casing 103, and movable upon command of auxiliary actuators 163a, 163b between a first work position at which they release axial movement of the respective sector-carrying ring 151a, 151b and a second work position at which they act against a radial shoulder 164a, 164b carried by the sector-carrying ring itself to lock the latter to the second work position as shown in Fig. 3. The stop blocks 161a, 161b can operate in thrust relationship against at least one frustoconical surface exhibited by the radial shoulder 164a, 164b so as to exert a constant action on the sector-carrying ring 151a, 151b in order to maintain the circumferential sectors 140 centripetally pushed towards axis X-X.

Due to radial moving apart of the circumferential sectors 140 with the mould 102 in the open conditions, easy introduction of tyre 50 to be cured and/or removal of the cured tyre is enabled through an access opening 170 defined between the upper 130b and lower 130a half shells in the open condition, without involving mechanical interferences between tyre 50 and the forming ridges 141 of the circumferential sectors themselves.

Apparatus 101 further contemplates use of at least one toroidal support 10 of metal material or other substantially rigid material, having an outer surface substantially reproducing the shape of the inner surface of tyre 50. The toroidal support 10 conveniently consists of a drum that can be split up, i.e. made up of circumferential sectors at least some of which are centripetally movable to dismantle the toroidal support itself and enable easy removal of same from tyre 50 when working has been completed.

Apparatus 101 further involves at least one feeding duct 110 to feed a primary working fluid under pressure, such as steam, nitrogen or other substantially inert gas or a mixture thereof, to be used, as better illustrated in the following, for tyre moulding and curing.

Also preferably present in apparatus 101 are heating devices for mould 102, preferably in the form of a plurality of ducts 105 for passage of a heating fluid, associated with the half shells 130a, 130b and/or the circumferential sectors 140, respectively.

Preferably, also present in apparatus 101 is a hermetically sealed device suitable to contain the toroidal support 10 on which a green tyre 50 has been previously built.

As shown in the accompanying drawings, said hermetically sealed device can be, in a preferred embodiment, enclosed and integrated into said mould 102 defining a hermetically sealed cavity within the mould itself.

Preferably, said mould 102 in this case comprises at least one circumferential gasket 107 put on the opposite surfaces of base 103a and of the closing portion 103b.

Said circumferential gasket 107 can be embodied by an O-ring or preferably a series of superposed metal rings having a sealing element placed between the opposite surfaces thereof and able to resist pressures and temperatures as required by the method described in the following.

A device for feeding a secondary working fluid such as air, nitrogen or other substantially inert gases, is operatively associated with said mould 102. Said device comprises at least one delivery duct (not shown) and one exhaust duct (not shown) for feeding and evacuating said secondary working fluid under pressure to and from said mould 102 respectively, for pressing the inner surface of said green tyre 50 from outside to inside, against the outer surface of said toroidal support 10, as better described in the following.

Feeding duct 110 is operatively associated with at least one passage device by a connecting duct 111 for example, that is formed in at least one of the centring shanks 11 of said toroidal support 10, to enable spreading of said primary working fluid under pressure within said toroidal support 10.

Said passage device is provided with suitable branches formed in the toroidal support 10 and by which said primary working fluid reaches a plurality of ducts (not shown) opening onto the outer surface of the toroidal support itself, through the gaps present between said circumferential sectors of the toroidal support 10, for example.

Preferably, a duct 112 adapted to evacuate the primary working fluid and/or possible condensate is then provided at the lower part of said moulding cavity 104.

In accordance with the method of the invention, the green tyre 50 is disposed on the toroidal support 10 before the latter is introduced together with the tyre itself, into the vulcanisation mould 102 set in the open condition.

In particular, arrangement of tyre 50 on the toroidal support 10 can be conveniently obtained by manufacturing the tyre directly on the support itself. In this manner the toroidal support 10 is advantageously utilised as a rigid shape for forming the different components such as liner, carcass plies, reinforcing structures to the beads, belt strips, sidewalls 51 and tread band 52 co-operating in forming tyre 50. More specifically, said components of tyre 50 are preferably made by suitable working units carrying out laying on said toroidal support 10 of elementary semi-finished products such as, by way of example, continuous elongated elements of elastomeric materials and strip-like elements of elastomeric material internally comprising at least one textile or metallic cord. For example, the tread band 52 can be obtained by winding said continuous elongated element of elastomeric material around the rotation axis of the toroidal support 10, in the form of coils disposed in side by side and/or superposed relationship or following another predetermined path.

Further details on the modes of laying the components of tyre 50 on the toroidal support 10 are for example described in the European Patent Application issued under No. 0 928 680 in the name of the same Applicant.

The toroidal support 10 carrying the green tyre 50 is transferred to the inside of mould 102 manually or with the aid of a robotized arm (not shown) or in any other manner, through the access opening 170 defined between the upper 130b and lower 130a half shells in the open condition.

Following axial movement of the closing portion 103b towards base 103a, the upper half shell 130b is brought into abutment against the lower half shell 130a, causing closure of tyre 50 into mould 102.

When closure has been completed, the circumferential sectors 140 are in the first work condition, the forming ridges 141 being spaced apart from the radially external surface of the tread band 52 of tyre 50.

Through delivery duct said secondary fluid under pressure is sent into the moulding cavity 104. The secondary working fluid therefore takes up the space included between the outer surface of said green tyre 50 and the inner surface of the moulding cavity 104. Substantially simultaneously, said primary working fluid under pressure is sent into said toroidal support 10 at a lower pressure than that of said secondary working fluid. After a short transient stage, the pressure differential resulting from what above illustrated is preferably maintained for some minutes. Since the primary working fluid is at a lower pressure, it will stay at the inside of said toroidal support 10 without escaping from the previously described ducts formed therethrough. In this way, during this step the green tyre 50 is pressed from outside to inside, so that the inner surface thereof preferably comprising the liner is pressed against the outer surface of the toroidal support 10.

Preferably said primary working fluid, that in this step is preferably formed of steam, is fed to a temperature generally included between about 170°C and 210°C.

During said period of time, the primary working fluid heats the toroidal support 10 and the latter transmits heat to the inner surface of the tyre, then to the region of the beads and preferably to the liner.

In addition or as an alternative to the primary working fluid conveyed through the feeding duct 110, different devices for administering heat to the inner surface of the tyre 50 can be provided, and they for example comprise electric resistors for heating the toroidal support 10.

Heating carried out through the toroidal support 10 does not fully cure said parts of tyre 50 but in any case it is sufficient to give the parts themselves elasticity features. In particular, the carcass ply or plies are well anchored to the beads, and the inner surface of the tyre 50, preferably the liner, becomes elastic enough to withstand the subsequent pressures of the moulding and curing process illustrated in the following, without being torn.

This pressing step of tyre 50 against the outer surface of the toroidal support 10, and simultaneous administration of heat to the inner surface of the tyre itself, terminates with evacuation of the secondary working fluid by means of the exhaust duct.

It will be appreciated that the absence of a direct contact between the forming ridges 141 and the tread band 52 during the pressing step of tyre 50 against the toroidal support 10 eliminates the risk of directly transmitting heat to the outer surface of the tread band 52. Therefore triggering of premature cross-linking on the tread band 52, which will give rise to footprints different from the desired ones on the finished tyre, is avoided, also due to a "memorisation" effect of the shape and position of the coils formed by the continuous elongated element wound on the toroidal support 10 so as to form the tread band 52.

In addition, exhaust interstices defined between the through slits 142 and the forming ridges 141 allow easy evacuation of the secondary working fluid under pressure from the moulding cavity 104 at the end of the pressing step of the tyre 50 against the toroidal support 10, without any risk of forming stagnation of fluid under pressure between the outer surface of the tread band 52 and the moulding cavity itself, in the spaces circumscribed by the forming ridges 141. Also the distance between the forming ridges 141 and the tread band 52, as well as the space between the circumferential sectors 140 due to the fact that they remain in the first work condition, promotes quick evacuation of the secondary working fluid under pressure between tyre 50 and the moulding cavity 104.

When the pressing step has been completed with evacuation of the working fluid utilised as above illustrated, the driving devices 150 are operated and they cause a centripetal approaching of the circumferential sectors 140 from the first to the second work condition at which the forming ridges 141 penetrate at least partly into the tread band 52. It will be recognised that in the apparatus in accordance with the invention the centripetal movement of the circumferential sectors 140 is therefore uncoupled from the movement consequent to the step of closing mould 102 between base 103a and the closing portion 103b.

The auxiliary blocks 161a, 161b are driven by the respective auxiliary actuators 163a, 163b to fix positioning of the circumferential sectors 140 to the second work condition, until the end of the subsequent step aimed at complete moulding and curing of tyre 50, which operation starts concurrently with fixing of the circumferential sectors 140 to the second work condition.

The above step starts by increasing the pressure of said primary working fluid to a value included between about 18 and about 35 bars, preferably between about 26 and about 28 bars, in order to mould and cure tyre 50 with the desired pulling strength on the carcass ply.

During this step the primary working fluid preferably comprises a steam and nitrogen mixture, even if it can consist of either steam alone or steam admixed with air or other substantially inert gases, or also of one or more gases such as air, nitrogen and other substantially inert gases.

The pressure generated by said primary working fluid reaches a diffusion gap (not shown) created between the outer surface of the toroidal support 10 and the inner surface of the tyre 50 to be cured.

In a preferential alternative embodiment, the diffusion gap is created directly following expansion of the tyre 50 caused by effect of the thrust exerted by said primary working fluid.

Thus pressing of the tyre 50 against the walls of the moulding cavity 104 is carried out concurrently with an expansion imposed to the tyre itself, until bringing the outer surface of the latter to fully adhere to the inner walls of the moulding cavity 104, the forming ridges 141 fully penetrating into the tread band 52.

In this step too, the exhaust interstices resulting from a mechanical clearance or embodied by grooves suitably set between the forming ridges 141 and the respective through slits 142, promote evacuation of the possible fluid still present between the outer surface of the tread band 52 and inner surface of the moulding cavity 104.

Since the elastomeric material forming the tread band 52 is in a raw state, i.e. devoid of important cross-linking triggers, perfect adaptation and optimal contact of the material itself against the inner walls of the moulding cavity 104 is obtained. In addition, said pressing action takes place concurrently with administration of heat to cause cross-linking of the elastomeric material forming tyre 50 and the consequent geometric and structural definition of the tyre itself.

Advantageously, said primary working fluid determining the desired pressure, while enabling moulding of the tyre 50 also supplies the necessary heat for vulcanisation.

When vulcanisation has been completed, the primary working fluid is evacuated from mould 102 and the driving devices 150 move the circumferential sectors 140 apart, bringing them back to the first work position, so as to cause disengagement of the latter from the corresponding cuts and/or grooves made by them in the tread band 52. Thus the subsequent mutual moving apart of the half shells 130a, 130b is facilitated as well as release of tyre 50 from mould 102, even when the tyre has a tread pattern abounding in grooves and/or cuts oriented in a substantially circumferential direction.

## Claims

1. A method of manufacturing pneumatic tyres for vehicle wheels, comprising the steps of:
- setting a green tyre (50) comprising a tread band (52) having a radially external surface, on a toroidal support (10) provided with an outer surface conforming in shape to an inner surface of the tyre (50) itself;
- setting a vulcanisation mould (102) having a moulding cavity (104) defined by two half shells (130a, 130b) adapted to be moved close to each other in an axial direction, and circumscribed by centripetally approachable circumferential sectors (140) carrying forming ridges (141) facing a geometric axis (X-X) of the moulding cavity (104) and movable in through slits (142) set in the half shells (130a, 130b);
- closing the tyre (50) into the moulding cavity (104);
- pressing the tyre (50) against the outer surface of the toroidal support (10);
- administering heat to the inner surface of the tyre (50) pressed against the toroidal support (10), keeping the circumferential sectors (140) spaced apart from the radially external surface of the tread band (52) ;
- centripetally approaching the circumferential sectors (140) of the mould (102) to cause at least partial penetration of the forming ridges (141) into the radially external surface of the tread band (52) of the tyre (50) ;
- pressing the radially external surface of the tread band (52) of the tyre (50) against a radially internal surface of the moulding cavity (104);
- administering heat to the tyre (50) penetrated by the forming ridges (141) of the circumferential sectors (140).

2. A method as claimed in claim 1, wherein the step of pressing the tyre (50) against the outer surface of the toroidal support (10) is carried out concurrently with administration of heat to the inner surface of the tyre (50).

3. A method as claimed in claim 1, wherein closure of the mould (102) into the moulding cavity (104) is carried out through axial approaching of said half shells (130a, 130b), from an open condition at which the half shells (130a, 130b) are mutually spaced apart to form an access opening (170) for access of the tyre (50) to the moulding cavity (104), to a closed condition at which the half shells (130a, 130b) mutually mate.

4. A method as claimed in claim 1, wherein the forming ridges (141) carry out a translation in said through slits (142) during centripetal approaching of said circumferential sectors (140).

5. A method as claimed in claim 1, wherein during pressing of the radially outer surface of the tread band (52), the step of evacuating fluid from the moulding cavity (104) through said through slits (142) is also carried out.

6. A method as claimed in claim 1, wherein administration of heat to the tyre (50) penetrated by the forming ridges (141) of the circumferential sectors (140) is carried out by admission of a primary working fluid into the toroidal support (10).

7. A method as claimed in claim 1, wherein the step of pressing the radially external surface of the tread band (52) against the radially internal surface of the moulding cavity (104) takes place during administration of heat to the tyre (50) penetrated by the forming ridges (141) of the circumferential sectors (140).

8. A method as claimed in claim 7, wherein pressing of the radially external surface of the tread band (52) against the radially internal surface of the moulding cavity (104) is carried out through admission of a primary fluid into a diffusion gap between the outer surface of the toroidal support (10) and the inner surface of the tyre (50).

9. A method as claimed in claim 1, wherein pressing of the tyre (50) against the outer surface of the toroidal support (10) is carried out through admission of a secondary fluid under pressure into the moulding cavity (104).

10. A method as claimed in claim 1, wherein administration of heat to the inner surface of the tyre (50) is carried out through heating of the toroidal support (10).

11. A method as claimed in claim 10, wherein heating of the toroidal support (10) is carried out by means of electric resistors.

12. A method as claimed in claim 10, wherein heating of the toroidal support (10) is carried out by means of a primary working fluid conveyed into the toroidal support (10).

13. A method as claimed in claim 1, further comprising the steps of:
- moving the circumferential sectors (140) apart to cause extraction of the forming ridges (141) from the radially external surface of the tread band (52) ;
- moving the half shells (130a, 130b) away from each other;
- extracting the tyre (50) from the mould (102).

14. A method as claimed in claim 1, wherein the green tyre (50) is directly formed on the toroidal support (10).

15. An apparatus for manufacturing pneumatic tyres for vehicle wheels, comprising:
- a toroidal support (10) having an outer surface conforming in shape to the inner surface of a green tyre (50) under working comprising a tread band (52) provided with a radially external surface;
- devices for arranging the green tyre (50) on the toroidal support (10);
- a vulcanisation mould (102) having two half shells (130a, 130b) adapted to be moved close to each other to define a moulding cavity (104), and centripetally-approachable circumferential sectors (140) circumscribing the moulding cavity (104) and carrying forming ridges (141) facing the geometric axis of the moulding cavity (104) and movable in through slits (142) set in said half shells (130a, 130b);
- devices for closing the tyre (50) into the moulding cavity (104);
- devices for pressing the tyre (50) enclosed in the moulding cavity (104) against the outer surface of the toroidal support (10);
- first devices for administering heat to the inner surface of the tyre (50) pressed against the toroidal support (10);
- driving devices (150) to be activated subsequently to closure of the tyre (50) into the moulding cavity (104) to cause translation of the circumferential sectors (140) between a first work condition at which the forming ridges (141) are radially spaced apart from the radially external surface of the tread band (52) of the tyre (50) enclosed in the moulding cavity (104), and a second work condition at which the forming ridges (141) penetrate at least partly into the radially external surface of the tread band (52);
- devices for pressing the radially external surface of the tread band (52) of the tyre (50) against a radially internal surface of the moulding cavity (104);
- second devices for administering heat to the tyre (50) penetrated by the forming ridges (141) of the circumferential sectors (140).

16. An apparatus as claimed in claim 15, wherein said half shells (130a, 130b) are mutually approachable between an open condition at which they are mutually spaced apart to form an access opening (170) for access of the tyre (50) to the moulding cavity (104), and a closed condition at which the half shells (130a, 130b) mutually mate.

17. An apparatus as claimed in claim 16, wherein matching of said half shells (130a, 130b) takes place following an undulated surface.

18. An apparatus as claimed in claim 15, wherein said half shells (130a, 130b) each have perimetral surfaces (131a, 131b) slidably engaging with the circumferential sectors (140) at least in the closed condition, to allow movement of the circumferential sectors (140) between the respective first and second work conditions.

19. An apparatus as claimed in claim 15, wherein said driving devices (150) comprise at least one sector-carrying ring (151a, 151b) that is axially movable relative to the moulding cavity (104) and has at least one frustocomical surface (155) slidably engaging said circumferential sectors (140) to cause translation of the circumferential sectors (140) between said first and second work conditions following an axial movement of the sector-carrying ring (151a, 151b).

20. An apparatus as claimed in claim 19, wherein the driving devices (150) further comprise pusher members (152a, 152b) operating on the sector-carrying ring (151a, 151b) by means of control rods (153a, 153b) slidably engaged through a casing (103) of said mould (102).

21. An apparatus.as claimed in claim 20, wherein said pusher members comprise first fluid-operated actuators (152a, 152b) that are fixed relative to the casing (103).

22. An apparatus as claimed in claim 21, wherein said first fluid-operated actuators (152a, 152b) operate on the control rods (153a, 153b) through idler arms (154a, 154b) pivoted on said casing (103).

23. An apparatus as claimed in claim 15, further comprising locking devices (160) to be activated in order to fix positioning of the circumferential sectors (140) to the second work condition.

24. An apparatus as claimed in claim 23, wherein said locking devices (160) comprise at least one stop block (161a, 161b) carried by at least one auxiliary control rod (162a, 162b) slidably engaged through a casing (103) of said mould (102), and movable upon command of an auxiliary actuator (163a, 163b) between a first work position at which it releases the axial movement of the sector-carrying ring (151a, 151b) and a second work position at which it acts against a radial shoulder (164a, 164b) carried by the sector-carrying ring (151a, 151b) to lock the latter to the second work position.

25. An apparatus as claimed in claim 24, wherein said at least one stop block (161a, 161b) operates in thrust relationship against at least one frustoconical surface exhibited by the radial shoulder (164a, 164b), so as to exert an action on the sector-carrying ring (151a, 151b) tending to centripetally push the circumferential sectors (140) towards the geometric axis (X-X) of the moulding cavity (104).

26. An apparatus as claimed in claim 15, wherein each circumferential sector (140) comprises a lower half (140a) and an upper half (140b) each in engagement with one of said half shells (130a, 130b).

27. An apparatus as claimed in claim 15, wherein in the first work condition the forming ridges (141) are positioned externally of the moulding cavity (104).

28. An apparatus as claimed in claim 15, further comprising exhaust interstices defined between the through slits (142) and the forming ridges (141) to evacuate fluid from the moulding cavity (104) during pressing of the radially external surface of the tread band (52).

29. An apparatus as claimed in claim 15, wherein said second devices for administering heat to the tyre (50) comprise at least one feeding duct (110) for feeding a primary working fluid into the toroidal support (10).

30. An apparatus as claimed in claim 15, wherein said devices for pressing the radially external surface of the tread band (52) against the radially internal surface of the moulding cavity (104) act when the circumferential sectors (140) are in the second work condition.

31. An apparatus as claimed in claim 15, wherein said devices for pressing the radially external surface of the tread band (52) comprise at least one feeding duct (110) for feeding a primary working fluid into a diffusion gap between the outer surface of the toroidal support (10) and the inner surface of the tyre (50).

32. An apparatus as claimed in claim 15, wherein said devices for pressing the tyre (50) against the outer surface of the toroidal support (10) comprise at least one delivery duct for feeding a secondary fluid under pressure to the moulding cavity (104).

33. An apparatus as claimed in claim 15, wherein the first devices for administering heat to the inner surface of the tyre (50) comprise electric resistors for heating the toroidal support (10).

34. An apparatus as claimed in claim 15, wherein the first devices for administering heat to the inner surface of the tyre (50) comprise a feeding duct (110) for feeding a primary fluid into the toroidal support (10).

35. An apparatus as claimed in claim 15, wherein the devices for setting the green tyre (50) on the toroidal support (10) comprise working units designed to form components of the tyre (50) directly on the toroidal support (10).

36. An apparatus as claimed in claim 15, wherein the moulding cavity (104) defined by the half shells (130a, 130b) disposed close to each other in a closed condition has a curvature ratio Rs included between about 0.15 and about 0.3.

37. An apparatus as claimed in claim 15, wherein the moulding cavity (104) defined by the half shells (130a, 130b) disposed close to each other in a closed condition has a curvature ratio Rs included between about 0.15 and about 0.45.

## Patentansprüche

1. Verfahren zur Herstellung von Luftreifen für Fahrzeugräder, wobei das Verfahren folgende Schritte umfasst:
- Aufsetzen eines Rohreifens (S0) umfassend einen Laufflächenring (52) mit einer radial äußeren Oberfläche auf einen ringförmigen Träger (10), der mit einer äußeren Oberfläche versehen ist, die in der Gestalt einer inneren Oberfläche des Reifens (50) selbst entspricht;
- Aufsetzen einer Vulkanisierform (102) mit einem Formungshohlraum (104), der durch zwei Halbschalen (130a, 130b) definiert wird, die dazu geeignet sind, in einer axialen Richtung einander angenähert zu werden, und der durch zentripetal annäherbare umlaufende Sektoren (140) umschrieben wird, die Formungsrippen (141) tragen, die zu einer geometrischen Achse (X-X) des Formungshohlraums (104) weisen und in durchgehenden Schlitzen (142), die in die Halbschalen (130a, 130b) eingesetzt sind, bewegbar sind;
- Einschließen des Reifens (50) in den Formungshohlraum (104);
- Pressen des Reifens (S0) gegen die äußere Oberfläche des ringförmigen Trägers (10);
- Anwenden von Wärme auf die innere Oberfläche des Reifens (50), der gegen den ringförmigen Träger (10) gepresst wird; wobei die umlaufenden Sektoren (140) in einem Abstand zu der radial äußeren Oberfläche des Laufflächenrings (S2) gehalten werden;
- zentripetales Annähern der umlaufenden Sektoren (140) der Form (102), um zumindest ein teilweises Eindringen der Formungsrippen (141) in die radial äußere Oberfläche des Laufflächenrings (52) des Reifens (50) zu verursachen;
- Pressen der radial äußeren Oberfläche des Laufflächenrings (52) des Reifens (50) gegen eine radial innere Oberfläche des Formungshohlraums (104);
- Anwenden von Wärme auf den Reifen (50), in den die Formungsrippen (141) der umlaufenden Sektoren (140) eingedrungen sind.

2. Verfahren nach Anspruch 1, wobei der Schritt des Pressens des Reifens (50) gegen die äußere Oberfläche des ringförmigen Trägers (10) gleichzeitig mit der Anwendung von Wärme auf die innere Oberfläche des Reifens (50) ausgeführt wird.

3. Verfahren nach Anspruch 1, wobei das Schließen der Form (102) zu dem Formungshohlraum (104) durch axiales Annähern der Halbschalen (130a, 130b) erfolgt, aus einem offenen Zustand, in dem die Halbschalen (130a, 130b) in einem Abstand voneinander angeordnet sind, um eine Zugangsöffnung (170) für den Zugang des Reifens (50) in den Formungshohlraum (104) zu bilden, in einen geschlossenen Zustand, in dem die Halbschalen (130a, 130b) miteinander zusammenpassen.

4. Verfahren nach Anspruch 1, wobei die Formungsrippen (141) während des zentripetalen Annäherns der umlaufenden Sektoren (140) eine Verschiebung in den Durchgangsschlitzen (142) ausführen.

5. Verfahren nach Anspruch 1, wobei während des Pressens der radial äußeren Fläche des Laufflächenrings (52) auch der Schritt des Abziehens von Fluid aus dem Formungshohlraum (104) durch die Durchgangsschlitze (142) ausgeführt wird.

6. Verfahren nach Anspruch 1, wobei die Anwendung von Wärme auf den Reifen (50), in den die Formungsrippen (141) der umlaufenden Sektoren (140) eingedrungen sind, durch Einlassen eines primären Arbeitsfluids in den ringförmigen Träger (10) erfolgt.

7. Verfahren nach Anspruch 1, wobei der Schritt des Pressens der radial äußeren Oberfläche des Laufflächenrings (52) gegen die radial innere Oberfläche des Formungshohlraums (104) während der Anwendung von Wärme auf den Reifen (50) erfolgt, in den die Formungsrippen (141) der umlaufenden Sektoren (140) eingedrungen sind.

8. Verfahren nach Anspruch 7, wobei der Schritt des Pressens der radial äußeren Oberfläche des Laufflächenrings (52) gegen die radial innere Oberfläche des Formungshohlraums (104) durch Einlassen eines primären Fluids in einen Diffusionsspalt zwischen der äußeren Oberfläche des ringförmigen Trägers (10) und der inneren Oberfläche des Reifens (50) ausgeführt wird.

9. Verfahren nach Anspruch 1, wobei das Pressen des Reifens (50) gegen die äußere Oberfläche des ringförmigen Trägers (10) durch Einlassen eines sekundären Fluids unter Druck in den Formungshohlraum (104) ausgeführt wird.

10. Verfahren nach Anspruch 1, wobei die Anwendung von Wärme auf die innere Oberfläche des Reifens (50) durch Beheizen des ringförmigen Trägers (10) ausgeführt wird.

11. Verfahren nach Anspruch 10, wobei das Beheizen des ringförmigen Trägers (10) mittels elektrischer Widerstände erfolgt.

12. Verfahren nach Anspruch 10, wobei das Beheizen des ringförmigen Trägers (10) mittels eines primären Arbeitsfluids erfolgt, das in den ringförmigen Träger (10) gefördert wird.

13. Verfahren nach Anspruch 1, das des Weiteren die folgenden Schritte umfasst:
- Auseinanderbewegen der umlaufenden Sektoren (140), um das Herausziehen der Formungsrippen (141) aus der radial äußeren Oberfläche des Laufflächenrings (52) zu verursachen;
- Wegbewegen der Halbschalen (130a, 130b) voneinander;
- Entnehmen des Reifens (50) aus der Form (102).

14. Verfahren nach Anspruch 1, wobei der Rohreifen (50) direkt auf dem ringförmigen Träger (10) geformt wird.

15. Vorrichtung zur Herstellung von Luftreifen für Fahrzeugräder, umfassend:
- einen ringförmigen Träger (10) mit einer äußeren Oberfläche, die in ihrer Gestalt der inneren Oberfläche eines Rohreifens (50) in Bearbeitung entspricht, der einen Laufflächenring (52) mit einer radial äußeren Oberfläche umfasst;
- Einrichtungen zur Anordnung des Rohreifens (50) auf dem ringförmigen Träger (10);
- eine Vulkanisierform (102) mit zwei Halbschalen (130a, 130b), die dazu geeignet sind, einander angenähert zu werden, um einen Formungshohlraum (104) zu definieren, und zentripetal annäherbaren umlaufenden Sektoren (140), die den Formungshohlraum (104) umschreiben und Formungsrippen (104) tragen, die zu der geometrischen Achse des Formungshohlraums (104) weisen und in durchgehenden Schlitzen (142), die in die Halbschalen (130a, 130b) eingesetzt sind, bewegbar sind;
- Einrichtungen zum Einschließen des Reifens (50) in den Formungshohlraum (104);
- Einrichtungen zum Pressen des Reifens (50), der in den Formungshohlraum (104) eingeschlossen ist, gegen die äußere Oberfläche des ringförmigen Trägers (10);
- erste Einrichtungen zum Anwenden von Wärme auf die innere Oberfläche des Reifens (50), der gegen den ringförmigen Träger (10) gepresst wird;
- Antriebseinrichtungen (150), die auf das Einschließen des Reifens (50) in den Formungshohlraum (104) folgend aktiviert werden, um eine Verschiebung der umlaufenden Sektoren (140) zwischen einem ersten Betriebszustand, in dem die Formungsrippen (141) radial von der radial äußeren Oberfläche des Laufflächenrings (52) des Reifens (50), der in de Formungshohlraum (104) eingeschlossen ist, beabstandet sind, und einem zweiten Betriebszustand, in dem die Formungsrippen (141) zumindest teilweise in die radial äußere Oberfläche des Laufflächenrings (52) eindringen, zu verursachen;
- Einrichtungen zum Pressen der radial äußeren Oberfläche des Laufflächenrings (52) des Reifens (50) gegen eine radial innere Oberfläche des Formungshohlraums (104);
- zweite Einrichtungen zum Anwenden von Wärme auf den Reifen (50), in den die Formungsrippen (141) der umlaufenden Sektoren (140) eingedrungen sind.

16. Vorrichtung nach Anspruch 15, wobei die Halbschalen (130a, 130b) zwischen einem offenen Zustand, in dem sie in einem Abstand voneinander angeordnet sind, um eine Zugangsöffnung (170) für den Zugang des Reifens (50) in den Formungshohlraum (104) zu bilden, und einem geschlossenen Zustand, in dem die Halbschalen (130a, 130b) miteinander zusammenpassen, aneinander annäherbar sind.

17. Vorrichtung nach Anspruch 16, wobei die Passung der Halbschalen (130a, 130b) einer gewellten Oberfläche entlang erfolgt.

18. Vorrichtung nach Anspruch 15, wobei die Halbschalen (130a, 130b) jeweils Umfangsoberflächen (131a, 131b) aufweisen, die zumindest in dem geschlossen Zustand gleitend mit den umlaufenden Sektoren (140) in Eingriff stehen, um jeweils die Bewegung der umlaufenden Sektoren (140) zwischen dem ersten und zweiten Betriebszustand zu ermöglichen.

19. Vorrichtung nach Anspruch 15, wobei die Antriebseinrichtungen (150) zumindest einen sektortragenden Ring (151a, 151b) umfassen, der axial relativ zu dem Formungshohlraum (104) beweglich ist und zumindest eine kegelstumpfförmige Oberfläche (155) aufweist, die mit den umlaufenden Sektoren (140) gleitend in Eingriff steht, um auf die axiale Bewegung des sektortragenden Rings (151a, 151b) folgend die Verschiebung der umlaufenden Sektoren (140) zwischen dem ersten und dem zweiten Betriebszustand zu verursachen.

20. Vorrichtung nach Anspruch 19, wobei die Antriebseinrichtungen (150) des Weiteren Schubelemente (152a, 152b) umfassen, die mittels Steuerstangen (153a, 153b), die gleitend durch eine Hülle (103) der Form (102) eingreifen, auf den sektortragenden Ring (151a, 151b) wirken.

21. Vorrichtung nach Anspruch 20, wobei die Schubelemente erste fluidbetätigte Stellglieder (152a, 152b) umfassen, die relativ zu der Hülle (103) fixiert sind.

22. Vorrichtung nach Anspruch 21, wobei die ersten fluidbetätigten Stellglieder (152a, 152b) durch Zwischenhebel (154a, 154b), die an der Hülle (103) angelenkt sind, auf die Steuerstangen (153a, 153b) wirken.

23. Vorrichtung nach Anspruch 15, des Weiteren umfassend Sicherungseinrichtungen (160), die aktiviert werden, um die Stellung der umlaufenden Sektoren (140) in dem zweiten Betriebszustand zu fixieren.

24. Vorrichtung nach Anspruch 23, wobei die Sicherungseinrichtungen (160) zumindest einen Anschlagsblock (161, 161b) umfassen, der von zumindest einem Zusatzsteuerstab (162a, 162b) getragen wird, der gleitend durch eine Hülle (103) der Form (102) in Eingriff steht und auf Befehl von einem Zusatzstellglied (163a, 163b) zwischen einer ersten Betriebsstellung, in der er die axiale Bewegung des sektortragenden Rings (151a, 151b) freigibt, und einer zweiten Arbeitsstellung bewegbar ist, in der er gegen eine von dem sektortragenden Ring (151a, 151b) getragene radiale Schulter (164a, 164b) wirkt, um den Ring in der zweiten Betriebsstellung zu verriegeln.

25. Vorrichtung nach Anspruch 24, wobei der zumindest eine Anschlagsblock (161a, 161b) in einer Stoßbeziehung gegen zumindest eine kegelstumpfförmige Oberfläche wirkt, die durch die radiale Schulter (164a, 164b) präsentiert wird, um so eine Wirkung auf den sektortragenden Ring (151a, 151b) auszuüben, die dazu tendiert, die umlaufenden Sektoren (140) zentripetal zu der geometrischen Achse (X-X) des Formungshohlraums (104) hin zu schieben.

26. Vorrichtung nach Anspruch 15, wobei jeder umlaufende Sektor (140) eine untere Hälfte (140a) und eine obere Hälfte (140b) umfasst, die jeweils mit einer der Halbschalen (130a, 130b) in Eingriff stehen.

27. Vorrichtung nach Anspruch 15, wobei in dem ersten Betriebszustand die Formungsrippen (141) außerhalb des Formungshohlraums (104) angeordnet sind.

28. Vorrichtung nach Anspruch 15, des Weiteren umfassend Abzugsspalte, die zwischen den Durchgangsschlitzen (142) und den Formungsrippen (141) definiert sind, um Fluid aus dem Formungshohlraum (104) während des Pressens der radial äußeren Oberfläche des Laufflächenrings (52) abzuziehen.

29. Vorrichtung nach Anspruch 15, wobei die zweiten Einrichtungen zum Anwenden von Wärme auf den Reifen (50) zumindest einen Zufuhrkanal (110) zur Zufuhr eines primären Arbeitsfluids in den ringförmigen Träger (10) umfassen.

30. Verfahren nach Anspruch 15, wobei die Einrichtungen zum Pressen der radial äußeren Oberfläche des Laufflächenrings (52) gegen die radial innere Oberfläche des Formungshohlraums (104) dann wirken, wenn die umlaufenden Sektoren (140) sich in der zweiten Betriebsstellung befinden.

31. Verfahren nach Anspruch 15, wobei die Einrichtungen zum Pressen der radial äußeren Oberfläche des Laufflächenrings (52) zumindest einen Zufuhrkanal (110) zur Zufuhr eines primären Arbeitsfluids in einen Diffusionsspalt zwischen der äußeren Oberfläche des ringförmigen Trägers (10) und der inneren Oberfläche des Reifens (50) umfassen.

32. Vorrichtung nach Anspruch 15, wobei die Einrichtungen zum Pressen des Reifens (50) gegen die äußere Oberfläche des ringförmigen Trägers (10) zumindest einen Zuführkanal zur Zufuhr eines sekundären Fluids unter Druck an den Formungshohlraum (104) umfassen.

33. Vorrichtung nach Anspruch 15, wobei die ersten Einrichtungen zum Anwenden von Wärme auf die innere Oberfläche des Reifens (50) elektrische Widerstände zur Erwärmung des ringförmigen Trägers (10) umfassen.

34. Vorrichtung nach Anspruch 15, wobei die ersten Einrichtungen zum Anwenden von Wärme auf die innere Oberfläche des Reifens (50) einen Zufuhrkanal (110) zur Zufuhr eines primären Fluids in den ringförmigen Träger (10) umfassen.

35. Vorrichtung nach Anspruch 15, wobei die Einrichtungen zum Aufsetzen des Rohreifens (50) auf den ringförmigen Träger (10) Arbeitseinheiten umfassen, die so konstruiert sind, dass sie Komponenten des Reifens (50) direkt auf dem ringförmigen Träger (10) formen.

36. Vorrichtung nach Anspruch 15, wobei der Formungshohlraum (104), der durch die Halbschalen (130a, 130b) definiert wird, die in einem geschlossenen Zustand nahe beieinander angeordnet sind, ein Krümmungsverhältnis von zwischen etwa 0,15 und etwa 0,3 aufweist.

37. Vorrichtung nach Anspruch 15, wobei der Formungshohlraum (104), der durch die Halbschalen (130a, 130b) definiert wird, die in einem geschlossenen Zustand nahe beieinander angeordnet sind, ein Krümmungsverhältnis von zwischen etwa 0,15 und etwa 0,45 aufweist.

## Revendications

1. Procédé de fabrication de bandages pneumatiques pour des roues de véhicule, comprenant les étapes qui consistent :
- à placer un pneu cru (50) comprenant une bande de roulement (52) ayant une surface radialement externe, sur un support toroïdal (10) muni d'une surface externe dont la forme correspond à une surface interne du pneu (50) lui-même ;
- à placer un moule de vulcanisation (102) ayant une cavité de moulage (104) définie par deux demi-coques (130a, 130b) adaptées pour être déplacées l'une près de l'autre dans une direction axiale, et circonscrite par des secteurs circonférentiels pouvant être rapprochés de manière centripète (140) portant des arêtes de formage (141) faisant face à un axe géométrique (X-X) de la cavité de moulage (104) et mobiles dans des fentes traversantes (142) placées dans les demi-coques (130a, 130b) ;
- à enfermer le pneu (50) dans la cavité de moulage (104) ;
- à presser le pneu (50) contre la surface externe du support toroïdal (10) ;
- à administrer de la chaleur à la surface interne du pneu (50) pressé contre le support toroïdal (10), à maintenir les secteurs circonférentiels (140) espacés de la surface radialement externe de la bande de roulement (52) ;
- à rapprocher de manière centripète les secteurs circonférentiels (140) du moule (102) pour provoquer une pénétration au moins partielle des arêtes de formage (141) dans la surface radialement externe de la bande de roulement (52) du pneu (50) ;
- à presser la surface radialement externe de la bande de roulement (52) du pneu (50) contre une surface radialement interne de la cavité de moulage (104) ;
- à administrer de la chaleur au pneu (50) traversé par les arêtes de formage (141) des secteurs circonférentiels (140).

2. Procédé tel que revendiqué dans la revendication 1, dans lequel l'étape qui consiste à presser le pneu (50) contre la surface externe du support toroïdal (10) est réalisée en même temps que l'administration de la chaleur à la surface interne du pneu (50).

3. Procédé tel que revendiqué dans la revendication 1, dans lequel la fermeture du moule (102) dans la cavité de moulage (104) est réalisée par un rapprochement axial desdites demi-coques (130a, 130b), à partir d'un état ouvert auquel les demi-coques (130a, 130b) sont mutuellement espacées pour former une ouverture d'accès (170) pour l'accès du pneu (50) à la cavité de moulage (104), à un état fermé auquel les demi-coques (130a, 130b) s'enclenchent mutuellement.

4. Procédé tel que revendiqué dans la revendication 1, dans lequel les arêtes de formage (141) réalisent une translation dans lesdites fentes traversantes (142) pendant le rapprochement centripète desdits secteurs circonférentiels (140).

5. Procédé tel que revendiqué dans la revendication 1, dans lequel lors du pressage de la surface radialement externe de la bande de roulement (52), l'étape qui consiste à évacuer un fluide de la cavité de moulage (104) à travers lesdites fentes traversantes (142) est également réalisée.

6. Procédé tel que revendiqué dans la revendication 1, dans lequel l'administration de la chaleur au pneu (50) traversé par les arêtes de formage (141) des secteurs circonférentiels (140) est réalisée par admission d'un fluide de travail primaire dans le support toroïdal (10).

7. Procédé tel que revendiqué dans la revendication 1, dans lequel l'étape qui consiste à presser la surface radialement externe de la bande de roulement (52) contre la surface radialement interne de la cavité de moulage (104) se déroule lors de l'administration de la chaleur au pneu (50) traversé par les arêtes de formage (141) des secteurs circonférentiels (140).

8. Procédé tel que revendiqué dans la revendication 7, dans lequel le pressage de la surface radialement externe de la bande de roulement (52) contre la surface radialement interne de la cavité de moulage (104) est réalisé par admission d'un fluide primaire dans un espace de diffusion entre la surface externe du support toroïdal (10) et la surface interne du pneu (50).

9. Procédé tel que revendiqué dans la revendication 1, dans lequel le pressage du pneu (50) contre la surface externe du support toroïdal (10) est réalisé par admission d'un fluide secondaire sous pression dans la cavité de moulage (104).

10. Procédé tel que revendiqué dans la revendication 1, dans lequel l'administration de la chaleur à la surface interne du pneu (50) est réalisée par chauffage du support toroïdal (10).

11. Procédé tel que revendiqué dans la revendication 10, dans lequel le chauffage du support toroïdal (10) est réalisé au moyen de résistances électriques.

12. Procédé tel que revendiqué dans la revendication 10, dans lequel le chauffage du support toroïdal (10) est réalisé au moyen d'un fluide de travail primaire transporté dans le support toroïdal (10).

13. Procédé tel que revendiqué dans la revendication 1, comprenant en outre les étapes qui consistent :
- à écarter les secteurs circonférentiels (140) pour provoquer l'extraction des arêtes de formage (141) de la surface radialement externe de la bande de roulement (52) ;
- à éloigner les demi-coques (130a, 130b) l'une de l'autre ;
- à extraire le pneu (50) du moule (102).

14. Procédé tel que revendiqué dans la revendication 1, dans lequel le pneu cru (50) est directement formé sur le support toroïdal (10).

15. Appareil pour fabriquer des bandages pneumatiques pour des roues de véhicule, comprenant :
- un support toroïdal (10) ayant une surface externe dont la forme correspond à la surface interne d'un pneu cru (50) lors du travail comprenant une bande de roulement (52) munie d'une surface radialement externe ;
- des dispositifs pour agencer le pneu cru (50) sur le support toroïdal (10) ;
- un moule de vulcanisation (102) ayant deux demi-coques (130a, 130b) adaptées pour être déplacées l'une près de l'autre pour définir une cavité de moulage (104), et des secteurs circonférentiels pouvant être rapprochés de manière centripète (140) circonscrivant la cavité de moulage (104) et portant des arêtes de formage (141) faisant face à l'axe géométrique de la cavité de moulage (104) et mobiles dans des fentes traversantes (142) placées dans lesdites demi-coques (130a, 130b) ;
- des dispositifs pour enfermer le pneu (50) dans la cavité de moulage (104) ;
- des dispositifs pour presser le pneu (50) enfermé dans la cavité de moulage (104) contre la surface externe du support toroïdal (10) ;
- des premiers dispositifs pour administrer de la chaleur à la surface interne du pneu (50) pressé contre le support toroïdal (10) ;
- des dispositifs d'entraînement (150) à activer après la fermeture du pneu (50) dans la cavité de moulage (104) pour provoquer la translation des secteurs circonférentiels (140) entre un premier état de travail auquel les arêtes de formage (141) sont radialement espacées de la surface radialement externe de la bande de roulement (52) du pneu (50) enfermé dans la cavité de moulage (104), et un deuxième état de travail auquel les arêtes de formage (141) pénètrent au moins partiellement dans la surface radialement externe de la bande de roulement (52) ;
- des dispositifs pour presser la surface radialement externe de la bande de roulement (52) du pneu (50) contre une surface radialement interne de la cavité de moulage (104) ;
- des deuxièmes dispositifs pour administrer de la chaleur au pneu (50) traversé par les arêtes de formage (141) des secteurs circonférentiels (140).

16. Appareil tel que revendiqué dans la revendication 15, dans lequel lesdites demi-coques (130a, 130b) peuvent être rapprochées mutuellement entre un état ouvert auquel elles sont mutuellement espacées pour former une ouverture d'accès (170) pour l'accès du pneu (50) à la cavité de moulage (104), et un état fermé auquel les demi-coques (130a, 130b) s'enclenchent mutuellement.

17. Appareil tel que revendiqué dans la revendication 16, dans lequel la correspondance desdites demi-coques (130a, 130b) se déroule suivant une surface ondulée.

18. Appareil tel que revendiqué dans la revendication 15, dans lequel lesdites demi-coques (130a, 130b) ont chacune des surfaces périphériques (131a, 131b) s'engageant en coulissement avec les secteurs circonférentiels (140) au moins dans l'état fermé, pour permettre le mouvement des secteurs circonférentiels (140) entre les premier et deuxième états de travail respectifs.

19. Appareil tel que revendiqué dans la revendication 15, dans lequel lesdits dispositifs d'entraînement (150) comprennent au moins une bague de support de secteur (151a, 151b) qui est axialement mobile par rapport à la cavité de moulage (104) et a au moins une surface tronconique (155) s'engageant en coulissement avec lesdits secteurs circonférentiels (140) pour provoquer la translation des secteurs circonférentiels (140) entre lesdits premier et deuxième états de travail suivant un mouvement axial de la bague de support de secteur (151a, 151b).

20. Appareil tel que revendiqué dans la revendication 19, dans lequel les dispositifs d'entraînement (150) comprennent en outre des éléments de poussée (152a, 152b) fonctionnant sur la bague de support de secteur (151a, 151b) au moyen de tiges de commande (153a, 153b) engagées en coulissement à travers un boîtier (103) dudit moule (102).

21. Appareil tel que revendiqué dans la revendication 20, dans lequel lesdits éléments de poussée comprennent des premiers actionneurs hydrauliques (152a, 152b) qui sont fixes par rapport au boîtier (103).

22. Appareil tel que revendiqué dans la revendication 21, dans lequel lesdits premier actionneurs hydrauliques (152a, 152b) fonctionnent sur les tiges de commande (153a, 153b) à travers des bras de renvoi (154a, 154b) amenés à pivoter sur ledit boîtier (103).

23. Appareil tel que revendiqué dans la revendication 15, comprenant en outre des dispositifs de verrouillage (160) à activer afin de fixer le positionnement des secteurs circonférentiels (140) au deuxième état de travail.

24. Appareil tel que revendiqué dans la revendication 23, dans lequel lesdits dispositifs de verrouillage (160) comprennent au moins un bloc d'arrêt (161a, 161b) porté par au moins une tige de commande auxiliaire (162a, 162b) engagée en coulissement à travers un boîtier (103) dudit moule (102), et mobile lors de la commande d'un actionneur auxiliaire (163a, 163b) entre une première position de travail à laquelle il libère le mouvement axial de la bague de support de secteur (151a, 151b) et une deuxième position de travail à laquelle il agit contre un épaulement radial (164a, 164b) porté par la bague de support de secteur (151a, 151b) pour verrouiller cette dernière à la deuxième position de travail.

25. Appareil tel que revendiqué dans la revendication 24, dans lequel ledit au moins un bloc d'arrêt (161a, 161b) fonctionne en relation de poussée contre au moins une surface tronconique présentée par l'épaulement radial (164a, 164b), de manière à exercer une action sur la bague de support de secteur (151a, 151b) ayant tendance à pousser de manière centripète les secteurs circonférentiels (140) vers l'axe géométrique (X-X) de la cavité de moulage (104).

26. Appareil tel que revendiqué dans la revendication 15, dans lequel chaque secteur circonférentiel (140) comprend une moitié inférieure (140a) et une moitié supérieure (140b) chacune étant en engagement avec l'une desdites demi-coques (130a, 130b).

27. Appareil tel que revendiqué dans la revendication 15, dans lequel, dans le premier état de travail les arêtes de formage (141) sont positionnées à l'extérieur de la cavité de moulage (104).

28. Appareil tel que revendiqué dans la revendication 15, comprenant en outre des interstices d'échappement définis entre les fentes traversantes (142) et les arêtes de formage (141) pour évacuer le fluide à partir de la cavité de moulage (104) pendant le pressage de la surface radialement externe de la bande de roulement (52).

29. Appareil tel que revendiqué dans la revendication 15, dans lequel lesdits deuxièmes dispositifs pour administrer de la chaleur au pneu (50) comprennent au moins un conduit d'alimentation (110) pour alimenter le support toroïdal (10) en fluide de travail primaire.

30. Appareil tel que revendiqué dans la revendication 15, dans lequel lesdits dispositifs pour presser la surface radialement externe de la bande de roulement (52) contre la surface radialement interne de la cavité de moulage (104) agissent lorsque les secteurs circonférentiels (140) sont dans le deuxième état de travail.

31. Appareil tel que revendiqué dans la revendication 15, dans lequel lesdits dispositifs pour presser la surface radialement externe de la bande de roulement (52) comprennent au moins un conduit d'alimentation (110) pour alimenter un espace de diffusion entre la surface externe du support toroïdal (10) et la surface interne du pneu (50) en fluide de travail primaire.

32. Appareil tel que revendiqué dans la revendication 15, dans lequel lesdits dispositifs pour presser le pneu (50) contre la surface externe du support toroïdal (10) comprennent au moins un conduit de distribution pour alimenter la cavité de moulage (104) en fluide secondaire sous pression.

33. Appareil tel que revendiqué dans la revendication 15, dans lequel les premiers dispositifs pour administrer de la chaleur à la surface interne du pneu (50) comprennent des résistances électriques pour chauffer le support toroïdal (10).

34. Appareil tel que revendiqué dans la revendication 15, dans lequel les premiers dispositifs pour administrer de la chaleur à la surface interne du pneu (50) comprennent un conduit d'alimentation (110) pour alimenter le support toroïdal (10) en fluide primaire.

35. Appareil tel que revendiqué dans la revendication 15, dans lequel les dispositifs pour placer le pneu cru (50) sur le support toroïdal (10) comprennent des unités de travail conçues pour former des composants du pneu (50) directement sur le support toroïdal (10).

36. Appareil tel que revendiqué dans la revendication 15, dans lequel la cavité de moulage (104) définie par les demi-coques (130a, 130b) disposées l'une près de l'autre dans un état fermé a un rapport de courbure Rs compris entre environ 0,15 et environ 0,3.

37. Appareil tel que revendiqué dans la revendication 15, dans lequel la cavité de moulage (104) définie par les demi-coques (130a, 130b) disposées l'une près de l'autre dans un état fermé a un rapport de courbure Rs compris entre environ 0,15 et environ 0,45.
